# EUROPEAN PATENT APPLICATION

(11) **EP 2 540 790 A1**
(43) Date of publication of application: **02.01.2013**
(21) Application number: 11747218.3
(22) Date of filing: 15.02.2011
(51) Int. Cl.: C09K 3/00, C08G 77/12, C08G 77/38, D21F 5/00, D21F 7/08

(54) **STAINPROOFING AGENT**

(30) Priority: 25.02.2010 JP 2010040020
(71) Applicant: Dow Corning Toray Co., Ltd., Tokyo, 100-0004 (JP)
(72) Inventor: KOJIMA Kazuhiko, Ichihara-shi Chiba 299-0108 (JP); OZAKI Masaru, Ichihara-shi Chiba 299-0108 (JP); SUGIURA Tsunehito, Ichihara-shi Chiba 299-0108 (JP); HORI Seiji, Ichihara-shi Chiba 299-0108 (JP)
(74) Representative: Müllejans, Inge
(86) International application number: PCT/JP2011/053141
(87) International publication number: WO 2011/105254

(57) **Abstract**

The present invention relates to a contamination inhibitor containing at least one polyorganosiloxane that has silicon-bonded functional groups and that has a number average molecular weight of 3,000 to 500,000 in terms of standard polystyrene as determined by gel permeation chromatography and a silicon-bonded functional group equivalent (a number average molecular weight per mol of the silicon-bonded functional groups) of 3,000 to 500,000 on average. The contamination inhibitor of the present invention can effectively prevent or reduce adhesion of adhering substances on the surface of a substrate even under high temperature conditions, and exhibits superior stability, since the modified silicone having functional groups is used.

## Description

### TECHNICAL FIELD

The present application is based upon and claims the benefit of priority from Japanese Patent Application No. 2010-40020, filed on February 25, 2010, the entire content of which is incorporated herein by reference.

The present invention relates to a contamination inhibitor for preventing or reducing adhesion of contaminants such as adhering substances and paper dust to a substrate, and in particular to a contamination inhibitor that can effectively prevent or reduce adhesion of contaminants even under an atmosphere exceeding 80°C.

### BACKGROUND ART

In a papermaking process, sheet-like wet paper is prepared from pulp or used paper materials, and is provided as a paper product after dehydration and drying. Wet paper contains various adherent substances. For example, gum pitch or tar components are included in the pulp material itself, and gum, hot melt, and a paper-strengthening agent are included in used paper materials. Paper dust is also generated during the papermaking process. These contaminants such as adhering substances and paper dust adhere to dryer rolls, canvas, or press rolls or the like of paper machines during the papermaking process causing various problems, and thereby papermaking productivity and paper quality are reduced.

Thus, for a paper machine, a contamination inhibitor for preventing or reducing adhesion of contaminants is used. Examples of the contamination inhibitors that are known in the field include the followings.

Japanese Unexamined Patent Application, First Publication No. H04-130190 discloses a lubricant for cleaning the surface of a paper dryer including an oil-based substance, a nonionic surfactant, and a cationic surfactant or an amphoteric surfactant, in which examples of the oil-based substances include polybutene, machine oil, and liquid paraffin. However, in order to form a non-adhesive layer composed of the aforementioned oil-based substances, it is necessary to use a large amount of oil-based substances.

In Japanese Unexamined Patent Application, First Publication No. H07-292382, it is disclosed that a silicone oil formed from polydimethylsiloxane is used for a paper drying process in order to obtain a contamination-preventing effect with a small amount of coating. In the silicone oil formed from a polydimethylsiloxane, oxygen atoms of the siloxane main-chain thereof are oriented to the surface of a substrate, and the methyl groups bonding to silicon atoms are oriented to the outside. For these reasons, although the silicone oil is applied to a substrate such as a press roll, a dryer roll, or a canvas of a paper machine, a non-adhesive layer formed from the aforementioned silicone oil can coat the surface of the substrate more strongly, and in fact, the silicone oil transfers to the paper body during the paper making process before reaching the aforementioned state. Thereby, adhering components in the paper may be adhered to the surface of the aforementioned substrate.

Therefore, an approach has been proposed in which silicone oil having a functional group is used instead of the silicone oils formed from polydimethylsiloxanes. For example, Japanese Unexamined Patent Application, First Publication No. 2000-96476 proposes that various silicone oils are applied to canvases in paper machines, in which examples of the aforementioned silicone oils include, in addition to a methylphenylsilicone oil and a diethylsilicone oil, an amino-modified silicone oil, an epoxy-modified silicone, and a higher fatty acid-modified silicone oil. In addition, Japanese Unexamined Patent Application, First Publication No. 2003-213587 (Japanese Patent No. 3388450) proposes a method for preventing adhesion of contaminants on the surface of a dryer roll or canvas by means of forming a non-adhesive layer which is produced by spraying an oil-in-water (O/W) emulsion of an epoxy-modified silicone oil or an amino-modified silicone oil on the surface of a dryer roll or canvas during the paper making process.

### List of Related Art Literatures

### Patent Literatures

Patent Literature 1: Japanese Unexamined Patent Application, First Publication No. H04-130190
Patent Literature 2: Japanese Unexamined Patent Application, First Publication No. H07-292382
Patent Literature 3: Japanese Unexamined Patent Application, First Publication No. 2000-96476
Patent Literature 4: Japanese Unexamined Patent Application, First Publication No. 2003-213587

### SUMMARY OF INVENTION

### Problems to be Solved by the Invention

In the case of using a modified silicone oil having a functional group with rich reactivity such as an epoxy group, an amino group, or a carboxyl group as a contamination inhibitor for a substrate such as a press roll, dryer roll, or canvas of a paper machine, the aforementioned modified silicone oil is more useful, compared with a silicone oil formed from a polydimethylsiloxane, since the modified silicone oil exhibits enhanced adhesiveness with respect to the surface of the aforementioned substrate. However, even when the modified silicones having the aforementioned functional groups are used, adhesion of adhering components such as pitch and tar to the surface of the aforementioned substrates cannot be instantly and sufficiently prevented. In particular, although the usage environment may be 80°C or higher when a contamination inhibitor is used for a paper machine, it is evident that, with a conventional contamination inhibitor, prevention or reduction of adhesion of adhering components to a substrate surface is not sufficient, in particular at high temperature.

An object of the present invention is to provide a contamination inhibitor which can effectively prevent or reduce adhesion of adhering substances to a surface of a substrate even under high temperature conditions, in which the contamination inhibitor is prepared using modified silicone having functional groups.

Another object of the present invention is to provide a contamination inhibitor which can be stably present even under high temperature conditions.

### Means for Solving the Problems

The objects of the present invention can be achieved by a contamination inhibitor including at least one polyorganosiloxane that has silicon-bonded functional groups and that has a number average molecular weight of 3,000 to 500,000 in terms of standard polystyrene as determined by gel permeation chromatography and a silicon-bonded functional group equivalent (a number average molecular weight per mol of the silicon-bonded functional groups) of 3,000 to 500,000 on average.

The polyorganosiloxane that has silicon-bonded functional groups preferably has a linear molecular structure or a linear molecular structure having a partial branch structure.

The silicon-bonded functional groups are preferably selected from the group consisting of a carboxyl group, an epoxy group, a carbinol group, an amino group, an amide group, a mercapto group, and a phenol group.

The carboxyl group may be represented by the formula: -R¹-COOQ (wherein R¹ represents a divalent hydrocarbon group; and Q represents a hydrogen atom, an alkali metal, ammonium, or the formula: -Si(CH₃)₃).

The epoxy group may be selected from the group consisting of a glycidoxyalkyl group, an epoxy cycloalkylalkyl group, and an oxiranylalkyl group.

The carbinol group may be represented by the formula: -R²-OH or -R²-O-R³-OH (wherein R² and R³ each independently represents a divalent hydrocarbon group).

The amino group or amide group may be represented by the formula: -R⁴-(NR⁵CH₂CH₂)₁-NR⁶R⁷ {wherein R⁴ represents a divalent hydrocarbon group; R⁵, R⁶, and R⁷each independently represents a hydrogen atom, a monovalent hydrocarbon group, an acyl group, or a group represented by the formula: -CH₂CH(OH)R⁸ (wherein R⁸ represents a hydrogen atom, a monovalent hydrocarbon group, or an acyl group); and 1 is an integer of 0 to 5}.

The polyorganosiloxane that has silicon-bonded functional groups is preferably represented by the average unit formula as follows:

(R₃SiO_{1/2})ₐ(XR₂SiO_{1/2})_{b}(R₂SiO_{2/2})_{c}(XRSiO_{2/2})_{d}(RSiO_{3/2})ₑ(XSiO_{3/2})_{f}(SiO_{4/2})_{g}

wherein a represents a number from 0 to 50; b represents a number from 0 to 50; c represents a number from 30 to 2700; d represents a number from 0 to 50; e represents a number from 0 to 50; f represents a number from 0 to 50; g represents a number from 0 to 10; b + d + f represents a number from 0.5 to 100; a + b + c + d + e + f + g represents a number from 30 to 2700; R each independently represents a monovalent hydrocarbon group, an alkoxy group having 1 to 5 carbon atoms, or a hydroxyl group; and X represents a group selected from the group consisting of a carboxyl group, an epoxy group, a carbinol group, an amino group, an amide group, a mercapto group, and a phenol group.

The polyorganosiloxane that has silicon-bonded functional groups can be obtained by hydrosilylation of:
(A) a polyorganosiloxane having silicon-bonded hydrogen atoms; and
(B) an organic compound having unsaturated aliphatic groups.

The polyorganosiloxane that has silicon-bonded functional groups can also be obtained by equilibrium polymerization of:
(C) a cyclic polyorganosiloxane; and
(D) a polyorganosiloxane that has silicon-bonded functional groups.

The polyorganosiloxane that has silicon-bonded functional groups can also be obtained by condensation of:
(E) a diorganopolysiloxane of which both ends of the molecular chain are blocked with hydroxyl groups, represented by the formula: HO-(SiR⁹₂O)ₓ-H (wherein R⁹ represents a monovalent hydrocarbon group; and x is a number of 5 to 2700); and
(F) an amino group-containing organoalkoxysilane represented by the formula: R¹⁰ₙR¹¹Si(OR¹²)₃₋ₙ (wherein R¹⁰ represents a monovalent hydrocarbon group; R¹¹ represents the formula: -R¹³-(NR¹⁴CH₂CH₂)ₘ-NH-R¹⁵ (wherein R¹³ represents a divalent hydrocarbon group; R¹⁴ and R¹⁵ each independently represents a hydrogen atom or a monovalent hydrocarbon group; and m is an integer of 0 to 5); R¹² represents a monovalent hydrocarbon group; and n is 0 or 1).

The contamination inhibitor of the present invention may be in the form of an oil-in-water emulsion or a water-in-oil emulsion.

The emulsion preferably further includes at least one nonionic surfactant.

The contamination inhibitor of the present invention can be used for preventing or reducing adhesion of contaminants to a substrate.

The contamination inhibitor of the present invention can be used particularly for a paper machine.

The present invention also relates to a method for preventing or reducing adhesion of contaminants to a substrate, the method including: applying, to a surface of the substrate, at least one polyorganosiloxane that has silicon-bonded functional groups and that has a number average molecular weight of 3,000 to 500,000 in terms of standard polystyrene as determined by gel permeation chromatography and a silicon-bonded functional group equivalent (a number average molecular weight per mol of the silicon-bonded functional groups) of 3,000 to 500,000 on average.

The present invention also relates to use of at least one polyorganosiloxane that has silicon-bonded functional groups for preventing or reducing adhesion of contaminants to a substrate, wherein the polyorganosiloxane has a number average molecular weight of 3,000 to 500,000 in terms of standard polystyrene as determined by gel permeation chromatography and has a silicon-bonded functional group equivalent (a number average molecular weight per mol of the silicon-bonded functional groups) of 3,000 to 500,000 on average.

The present invention also relates to polyorganosiloxane that has silicon-bonded functional groups for preventing or reducing adhesion of contaminants to a substrate, wherein the polyorganosiloxane has a number average molecular weight of 3,000 to 500,000 in terms of standard polystyrene as determined by gel permeation chromatography and has a silicon-bonded functional group equivalent (a number average molecular weight per mol of the silicon-bonded functional groups) of 3,000 to 500,000 on average.

### Effects of the Invention

The contamination inhibitor of the present invention can form a non-adhesive layer on the surface of a substrate to effectively prevent or reduce adhesion of adhering substances on the surface of the substrate. In particular, the contamination inhibitor of the present invention can be applied to the surface of a press roll, dryer roll, canvas or the like of a paper machine, and thereby, adhesion of adhering substances such as pitch, tar, and ink to the aforementioned surface can be effectively avoided.

The contamination inhibitor of the present invention can exhibit the effect of preventing or reducing contamination even under high temperature conditions. Further, the contamination inhibitor of the present invention has excellent stability even under high temperature conditions. Still further, the contamination inhibitor of the present invention does not have properties of being cured by heat or water, and in addition, the curing is not necessary. Thus, it may be coated on a substrate, as it is, and thereby, the effect of preventing or reducing contamination can be exhibited.

The method, use, and the like of the present invention are similarly useful for preventing or reducing adhesion of contaminants to a surface of a substrate. The effect is maintained even under high temperature conditions.

### MODES FOR CARRYING OUT INVENTION

In paragraph [0058] of Japanese Unexamined Patent Application, First Publication No. 2003-213587, it is suggested that silicon-bonded functional group equivalents are not related to the property of preventing contamination. However, the inventors of the present invention found that silicon-bonded functional group equivalents have a significant influence on the inhibition of adhesion of contaminants to a substrate, in particular at high temperature.

Thus, the contamination inhibitor of the present invention contains, as an effective component, at least one polyorganosiloxane that has silicon-bonded functional groups and that has a number average molecular weight of 3,000 to 500,000 in terms of standard polystyrene as determined by gel permeation chromatography and a silicon-bonded functional group equivalent (number average molecular weight per mol of the silicon-bonded functional groups) of 3,000 to 500,000 on average.

As used herein, the term silicon-bonded functional group equivalent means the number average molecular weight of polyorganosiloxane per mol of the silicon-bonded functional groups in terms of standard polystyrene as determined by gel permeation chromatography. Further, even when the silicon-bonded functional group includes two amino groups (i.e., functional groups of diamine type), it is treated as one silicon-bonded functional group.

The silicon-bonded functional group equivalent is preferably, 3,000 to 500,000, more preferably 5,000 to 300,000, and still more preferably 12,000 to 100,000.

The silicon-bonded functional groups are preferably present at an end of the molecular chain. As an average molecular structure, the polyorganosiloxane preferably has the silicon-bonded functional groups at an end of the molecular chain.

The polyorganosiloxane that has silicon-bonded functional groups may be any one of a polyorganosiloxane that has silicon-bonded functional groups at one end of the molecular chain, a polyorganosiloxane that has silicon-bonded functional groups at both ends of the molecular chain, and a mixture thereof.

The contamination inhibitor of the present invention may contain a polyorganosiloxane that has silicon-bonded functional groups, as a mixture of a polyorganosiloxane that has silicon-bonded functional groups at one end of the molecular chain and a polyorganosiloxane that does not have silicon-bonded functional groups, or a mixture of a polyorganosiloxane that has silicon-bonded functional groups at both ends of the molecular chain and a polyorganosiloxane that does not have silicon-bonded functional groups. Further, the polyorganosiloxane may be contained in the form of a mixture of polyorganosiloxane that has silicon-bonded functional groups at one end of the molecular chain, polyorganosiloxane that has silicon-bonded functional groups at both ends of the molecular chain, and polyorganosiloxane that does not have silicon-bonded functional groups. When the polyorganosiloxane that does not have silicon-bonded functional groups is contained, the amount thereof is preferably less than 70% by weight in the mixture, more preferably less than 60% by weight, still more preferably less than 50% by weight, and particularly preferably less than 40% by weight.

The molecular structure of the polyorganosiloxane that has silicon-bonded functional groups is, although not specifically limited, preferably a linear chain or a partially linear chain having a branch.

Viscosity of the polyorganosiloxane that has silicon-bonded functional groups is preferably 30 to 1,000,000 mPa·s at 25°C, more preferably 50 to 500,000 mPa·s, and most preferably 80 to 100,000 mPa·s. As described herein, the viscosity is measured by an E type rotational viscometer at room temperature (25°C).

The molecular weight of the polyorganosiloxane that has silicon-bonded functional groups is preferably 3,000 to 500,000, more preferably 5,000 to 300,000, still more preferably 10,000 to 100,000, and most preferably 12,000 to 50,000. As described herein, the molecular weight means a number average molecular weight of polyorganosiloxane in terms of standard polystyrene as determined by gel permeation chromatography.

The silicon-bonded functional groups are the functional groups bonded to a silicon atom. The type of silicon-bonded functional groups is not specifically limited, and a group selected from the group consisting of a carboxyl group, an epoxy group, a carbinol group, an amino group, an amide group, a mercapto group, and a phenol group is preferable. Among them, a carboxyl group, an epoxy group, a carbinol group, and an amino are preferable. Further, those groups may be directly bonded to a silicon atom or bonded indirectly via other groups. However, in the present invention, the silicon-bonded functional groups are not a hydroxyl group or an alkoxy group.

The carboxyl group may be any group represented by the formula: -R¹-COOQ (wherein R¹ represents a divalent hydrocarbon group; and Q represents a hydrogen atom, an alkali metal, ammonium, or the formula: -Si(CH₃)₃).

Examples of the divalent hydrocarbon group include a linear or branched and substituted or unsubstituted divalent hydrocarbon group having 1 to 30 carbon atoms. Examples of the linear or branched and substituted or unsubstituted divalent hydrocarbon group having 1 to 30 carbon atoms include a linear or branched alkylene group having 1 to 30 carbon atoms such as a methylene group, a dimethylene group, a trimethylene group, a tetramethylene group, a pentamethylene group, a hexamethylene group, a heptamethylene group, and an octamethylene group; an alkenylene group having 2 to 30 carbon atoms such as a vinylene group, an allylene group, a butenylene group, a hexenylene group, and an octenylene group; an arylene group having 6 to 30 carbon atoms such as a phenylene group and a diphenylene group; an alkylenearylene group having 7 to 30 carbon atoms such as a dimethylenephenylene group; and those hydrocarbon groups in which the hydrogen atom bonded to the carbon atom is at least partially a halogen atom such as a fluorine. The divalent hydrocarbon group is preferably a divalent, unsubstituted and saturated hydrocarbon group having 1 to 30 carbon atoms, and is preferably a linear or branched alkylene group having 1 to 30 carbon atoms.

The epoxy group is preferably selected from the group consisting of glycidoxyalkyl group, an epoxy cycloalkylalkyl group, and an oxiranylalkyl group.

The carbinol group is preferably a group represented by the formula: -R²-OH or -R²-O-R³-OH (wherein R² and R³ each independently represents a divalent hydrocarbon group). As for the divalent hydrocarbon group, those described above can be used.

The amino group or amide group is preferably a group represented by the formula: -R⁴-(NR⁵CH₂CH₂)₁-NR⁶R⁷ {wherein R⁴ represents a divalent hydrocarbon group; R⁵, R⁶, and R⁷ each independently represents a hydrogen atom, a monovalent hydrocarbon group, an acyl group, or a group represented by the formula: -CH₂CH(OH)R⁸ (wherein R⁸ represents a hydrogen atom, a monovalent hydrocarbon group, or an acyl group); and 1 is an integer of 0 to 5}. As for the divalent hydrocarbon group, those described above can be used.

Examples of the monovalent hydrocarbon group include an alkyl group having 1 to 30 carbon atoms, an aryl group, an alkenyl group, and an aralkyl group. Examples of an alkyl group, an aryl group, an alkenyl group, and an aralkyl group include a linear or branched alkyl group having 1 to 30 carbon atoms such as a methyl group, an ethyl group, a propyl group, a butyl group, a pentyl group, a hexyl group, a heptyl group, and an octyl group; a cyclic alkyl group having 3 to 30 carbon atoms such as a cyclopentyl group and a cyclohexyl group; an aryl group having 6 to 30 carbon atoms such as a phenyl group, a tolyl group, and a xylyl group; an alkenyl group having 2 to 30 carbon atoms such as a vinyl group, an allyl group, a butenyl group, a hexenyl group, and an octenyl group; an aralkyl group having 7 to 30 carbon atoms such as a benzyl group; and those hydrocarbon groups in which the hydrogen atom bonded to the carbon atom is at least partially substituted with a halogen atom such as a fluorine. It is preferable that an alkyl group, an aryl group, an alkenyl group, or an aralkyl group be an alkyl group, an aryl group, an alkenyl group, or an aralkyl group, unsubstituted and having 1 to 10 carbon atoms. An alkyl group or an aryl group which is unsubstituted and has 1 to 6 carbon atoms is more preferable. A methyl group, an ethyl group, a propyl group, or a phenyl group is particularly preferable.

As an acyl group, an acyl group having 2 to 30 carbon atoms is preferable. An aliphatic acyl group is more preferable.

The polyorganosiloxane that has silicon-bonded functional groups is preferably a polyorganosiloxane represented by the average unit formula as follows:

(R₃SiO_{1/2})ₐ(XR₂SiO_{1/2})_{b}(R₂SiO_{2/2})_{c}(XRSiO_{2/2})_{d}(RSiO_{3/2})ₑ(XSiO_{3/2})_{f}(SiO_{4/2})_{g}.

In the formula above, a represents a number from 0 to 50, and is preferably 1 to 10 and more preferably 1 to 2.
b represents a number from 0 to 50, and is preferably 0.01 to 10, more preferably 0.1 to 5, and still more preferably 0.5 to 2.
c represents a number from 30 to 2700, and is preferably 60 to 1300 and more preferably 130 to 700.
d represents a number from 0 to 50, and is preferably 0 to 5, more preferably 0 to 1, and still more preferably 0.
e represents a number from 0 to 50, and is preferably 0 to 5, more preferably 0 to 1, and still more preferably 0.
f represents a number from 0 to 50, and is preferably 0 to 5, more preferably 0 to 1, and still more preferably 0.
g represents a number from 0 to 10, and is preferably 0 to 1, and more preferably 0.
b + d + f represents a number from 0.01 to 100, and is preferably 0.1 to 10, and more preferably 0.5 to 2.
a + b + c + d + e + f + g represents a number from 30 to 2700, and is preferably 60 to 1300, and more preferably 130 to 700.

In the formula above, R each independently represents a monovalent hydrocarbon group, an alkoxy group having 1 to 5 carbon atoms, or a hydroxyl group; and X represents a group selected from the group consisting of a carboxyl group, an epoxy group, a carbinol group, an amino group, an amide group, a mercapto group, and a phenol group. As for the monovalent hydrocarbon group, those described above can be used.

As an alkoxy group, a methoxy group, an ethoxy group, a propoxy group or the like can be used.

The method for producing the polyorganosiloxane that has silicon-bonded functional groups as used in the present invention is not specifically limited, but any method known in the field may be used.

For example, the polyorganosiloxane that has the silicon-bonded functional groups may be obtained by hydrosilylation of
(A) a polyorganosiloxane having silicone-bonded hydrogen atoms, and
(B) an organic compound having unsaturated aliphatic groups.

Examples of the unsaturated aliphatic group include an aliphatic group having end unsaturation represented by the formula: -R'-C(R")=CH₂ (wherein R' represents a single bond or a divalent hydrocarbon group; and R" represents a hydrogen atom or a monovalent hydrocarbon group). In particular, a vinyl group and an allyl group are preferable.

The organic compound contains at least one organic group. The organic group is preferably a group selected from the group consisting of a carboxyl group, an epoxy group, a carbinol group, an amino group, an amide group, a mercapto group, and a phenol group.

To perform the hydrosilylation rapidly at relatively low temperature, a catalyst is preferably used. Examples of the catalyst that may be used include those well known in the field as a catalyst for hydrosilylation, for example a compound such as platinum, ruthenium, rhodium, palladium, osmium, and indium. In particular, a platinum compound is useful. Examples of the platinum compound include chloroplatinic acid, platinum, solid platinum supported on a carrier such as alumina, silica, or carbon black, platinum - vinylsiloxane complex, platinum - phosphine complex, platinum - phosphite complex, and platinum alcoholate catalyst. For the hydrosilylation, the platinum catalyst may be used in an amount of about 0.0001 % by weight to 0.1% by weight in terms of platinum.

For the hydrosilylation, a solvent may be used, if necessary. Examples of the solvent that may be used include ether; ketone such as acetal and cyclohexanone; ester; phenol; hydrocarbon; halogenated hydrocarbon; and a dimethylpolysiloxane. The hydrosilylation reaction may be carried out, if the catalyst is used, for about 10 mins to 8 hours at the temperature of about 20°C to 150°C, and preferably about 40°C to 120°C.

The polyorganosiloxane that has silicon-bonded functional groups may be also obtained by equilibrium polymerization of
(C) a cyclic polyorganosiloxane, and
(D) a polyorganosiloxane that has silicone-bonded functional groups.

Examples of the cyclic polyorganosiloxane include hexamethylcyclotrisiloxane, octamethylcyclotetrasiloxane, 1,3,5-trimethyl-1,3,5-triphenylcyclotrisiloxane, 1,3,5,7-tetramethyl-1,3,5,7-tetraphenylcyclotetrasiloxane, hexaphenylcyclotrisiloxane, octaphenylcyclotetrasiloxane, 1,3,5-trimethyl-1,3,5-trivinylcyclotrisiloxane, 1,3,5,7-tetramethyl-1,3,5,7-tetravinylcyclotetrasiloxane, hexavinylcyclotrisiloxane, and octavinylcyclotetrasiloxane.

For the equilibrium polymerization, a catalyst for equilibrium polymerization may be used. Examples of the catalyst for equilibrium polymerization include alkali hydroxide such as lithium hydroxide, sodium hydroxide, potassium hydroxide, cesium hydroxide, rubidium hydroxide, tetramethyl ammonium hydroxide, and tetrabutyl phosphonium hydroxide; alkali silanolate such as lithium silanolate, sodium silanolate, potassium silanolate, cesium silanolate, tetramethyl ammonium silanolate, and tetrabutyl phosphonium silanolate; and an organometallic compound such as butyl lithium, methyl lithium, sodium naphthalenide, and potassium naphthalenide.

For the purpose of promoting the equilibrium polymerization, a solvent for promoting polymerization that is conventionally known in the field may be used. When a solvent for promoting polymerization is used, the equilibrium polymerization easily progresses at relatively low temperature and the dissociation reaction of an amide group during the equilibrium polymerization can be controlled, and therefore desirable. Examples of the solvent for promoting polymerization include a polar organic solvent such as tetrahydrofuran, dimethylformamide, dimethylsulfoxide, and acetonitrile.

As for the temperature for equilibrium polymerization, the reaction is preferably carried out within the temperature range of 50 to 200°C. The reaction is more preferably carried out within the temperature range of 50 to 150°C. The reaction is particularly preferably carried out within the temperature range of 50 to 140°C. The equilibrium polymerization may be carried out for 10 mins to 10 hours.

The polyorganosiloxane that has silicon-bonded functional groups may be also obtained by condensation of a diorganopolysiloxane of which both ends of the molecular chain are blocked with hydroxyl groups, and alkoxysilane having silicon-bonded functional groups such as alkoxysilane containing an amino group or alkoxy silane containing an epoxy group. For the condensation, a catalyst for condensation may be used. However, it is not particularly necessary to use a catalyst for condensation. By reacting the alkoxysilane having silicon-bonded functional groups in an amount of less than 2 moles, preferably 1.5 moles or less, and more preferably 1 mole or less with 1 mole of the diorganopolysiloxane of which both ends of the molecular chain are blocked with hydroxyl groups, without using catalyst, a polyorganosiloxane having silicon-bonded functional groups at an end of the molecular chain can be obtained.

For example, a polyorganosiloxane that contains an amino group as a silicon-bonded functional group may be obtained by condensation of
(E) a diorganopolysiloxane of which both ends of the molecular chain are blocked with hydroxyl groups, represented by the formula: HO-(SiR⁹₂O)ₓ-H (wherein R⁹ represents a monovalent hydrocarbon group; and x is a number of 5 to 2700), and
(F) an amino group-containing organoalkoxysilane represented by the general formula: R¹⁰ₙR¹¹Si(OR¹²)₃₋ₙ (wherein R¹⁰ represents a monovalent hydrocarbon group; R¹¹ represents the formula: -R¹³-(NR¹⁴H₂CH₂)ₘ-NH-R¹⁵ (wherein R¹³ represents a divalent hydrocarbon group; R¹⁴ and R¹⁵ each independently represents a hydrogen atom or a monovalent hydrocarbon group; and m is an integer of 0 to 5); R¹² represents a monovalent hydrocarbon group; and n is 0 or 1). As for the monovalent hydrocarbon group and the divalent hydrocarbon group, those described above can be used.

The condensation may be carried out in the temperature range of 50°C to 150°C under a nitrogen atmosphere while maintaining the same temperature and removing alcohols or the like that are produced as a byproduct of the reaction. The condensation may be carried out for about 10 mins to 8 hours.

As a contamination inhibitor, the polyorganosiloxane that has silicon-bonded functional groups obtained as described above may be used as it is or after being dissolved in an organic solvent. However, to lessen the burden on environments, it is preferably prepared in the form of an oil-in-water emulsion or a water-in-oil emulsion. In this case, the emulsion can be prepared by adding water and an emulsifying agent to the polyorganosiloxane that has silicon-bonded functional groups and emulsify them by mixing and stirring. The emulsification may be carried out by using a common means and facilities used for emulsification.

As an emulsifying agent for preparing the aforementioned emulsion, any emulsifying agent used in the preparation of a silicone emulsion can be used, and any emulsifying agent such as an anionic, cationic, amphoteric or nonionic emulsifying agent can be used. The emulsifying agent may be used alone or in combination with two or more types thereof.

Examples of anionic surfactants include saturated or unsaturated higher fatty acid salts such as sodium stearate; long-chain-alkylsulfuric acid salts, alkylbenzenesulfonic acids such as dodecylbenzenesulfonic acid and salts thereof; polyoxyalkylene alkyl ether sulfuric acid salts; polyoxyalkylene alkenyl ether sulfuric acid salts; polyoxyethylene alkylsulfuric acid ester salts: sulfosuccinic acid alkyl ester salts; polyoxyalkylene sulfosuccinic acid salts; long-chain alkanesulfonic acid salts; polyoxyalkylene alkyl ether acetic acid salts; long-chain alkyl phosphoric acid salts; polyoxyalkylene alkyl ether phosphoric acid salts; acylglutamic acid salts; alkyloyl alkyl taurine salts; N-acylamino acid salts; alkyl alkyl ether carboxylic acid salts; α-sulfofatty acid ester salts; alanine derivatives; glycine derivatives; and arginine derivatives. Examples of the aforementioned salts include alkali metal salts such as sodium salts, alkanolamine salts such as triethanolamine salts, and ammonium salts. Sodium salts are preferable.

Examples of cationic surfactants include quaternary ammonium salts such as alkyltrimethyl ammonium salts and dialkyldimethyl ammonium salts.

Examples of amphoteric surfactants include imidazoline type, aminobetaine type, alkylbetaine type, alkylamidobetaine type, alkylsulfobetaine type, amidosulfobetaine type, hydroxysulfobetaine type, carbobetaine type, phosphobetaine type, aminocarboxylic acid type, and amidoamino acid type amphoteric surfactants.

Examples of nonionic surfactants include polyoxyalkylene modified silicones, polyoxyalkylene ethers, polyoxyalkylene alkyl ethers, polyoxyalkylene fatty acid esters, polyoxyalkylene fatty acid diesters, polyoxyalkylene resin acid esters, polyoxyalkylene alkylphenols, polyoxyalkylene alkylphenyl ethers, polyoxyalkylene alkyl esters, sorbitan fatty acid esters, polyoxyalkylene sorbitan fatty acid esters, polyoxyalkylene glycerin fatty acid esters, sucrose fatty acid esters, fatty acid alkanolamides, alkylglucosides, and polyoxyalkylene fatty acid bisphenyl ethers.

Among those surfactants, at least one nonionic surfactant is preferable. In particular, a nonionic surfactant having an HLB value which is 13 or larger, preferably 14 or larger, and more preferably 15 or larger is preferable. Further, it is also possible that a nonionic surfactant having an HLB value which is 13 or larger be used in combination of a nonionic surfactant having an HLB value which is less than 13.

In the contamination inhibitor of the present invention, any additives may be blended within a range which does not impair the purposes thereof. Examples of the aforementioned additives include a viscosity modifier, a pH modifier, and an antifoaming agent. The types and blending amounts of the additives can be appropriately adjusted in accordance with usages of the contamination inhibitor of the present invention.

The contamination inhibitor of the present invention can be used as a coating agent for various substrates. The contamination inhibitor of the present invention is applied on the surface of a substrate, and thereby, forms a non-adhesive layer on the surface of the aforementioned substrate. Thereby, adhesion of various materials to the surface of the substrate can be prevented or reduced, and contamination of the surface of the aforementioned substrate can be prevented. The application amount of the coating agent to the surface of the substrate and the concentration of the contamination inhibitor in the coating agent can be appropriately modified in accordance with types, sizes, and the like of the substrates.

The contamination inhibitor of the present invention can be, in particular, suitably used as a contamination inhibitor of a paper machine.

For example, by coating the contamination inhibitor of the present invention on a surface of a substrate that is in contact with paper such as a press roll, dryer roll, canvas or the like of a paper machine, a non-adhesive layer is formed on the surface of the substrate, and thus the contamination can be effectively prevented or reduced. Specifically, by coating the contamination inhibitor of the present invention on a surface of a press roll, dryer roll, canvas or the like, adhesion of adhering substances such as pitch, tar, and ink to the aforementioned surface can be effectively prevented or reduced. As a result, a frequency of cleaning the surface may be reduced and the productivity of a paper product can be improved.

Further, aspects of the present invention include a method for preventing or reducing adhesion of contaminants to a substrate, the method including applying, to a surface of the substrate, at least one polyorganosiloxane that has silicon-bonded functional groups and that has a number average molecular weight of 3,000 to 500,000 in terms of standard polystyrene as determined by gel permeation chromatography and a silicon-bonded functional group equivalent (a number average molecular weight per mol of the silicon-bonded functional groups) of 3,000 to 500,000 on average; use of at least one polyorganosiloxane that has silicon-bonded functional groups for preventing or reducing adhesion of contaminants to a substrate, in which the polyorganosiloxane has a number average molecular weight of 3,000 to 500,000 in terms of standard polystyrene as determined by gel permeation chromatography and has a silicon-bonded functional group equivalent (a number average molecular weight per mol of the silicon-bonded functional groups) of 3,000 to 500,000 on average; and a polyorganosiloxane that has silicon-bonded functional groups for preventing or reducing adhesion of contaminants to a substrate, in which the polyorganosiloxane has a number average molecular weight of 3,000 to 500,000 in terms of standard polystyrene as determined by gel permeation chromatography and has a silicon-bonded functional group equivalent (a number average molecular weight per mol of the silicon-bonded functional groups) of 3,000 to 500,000 on average.

### INDUSTRIAL APPLICABILITY

As a coating agent for various substrates such as a mold for molding plastics, rubber, or the like, the contamination inhibitor of the present invention can be used in broad range. In particular, the contamination inhibitor of the present invention can be preferably used as a contamination inhibitor for a paper machine for preventing or reducing adhesion of adhering substances such as pitch, tar, and ink on a press roll, dryer roll, canvas or the like that is used in a paper machine.

Further, the method, use, and the like of the present invention can also be used for preventing or reducing adhesion of contaminants to the surface of various substrates and also for maintaining a clean surface of the substrate.

### EXAMPLES

Hereinafter, the present invention is described in detail with reference to Examples and Comparative Examples. However, it should be understood that the present invention is not limited to these Examples. The term "part(s)" means "part(s) by weight". Further, the number average molecular weight was measured under the conditions described below.
Eluent: toluene
Sample concentration: 1% by weight
Detector: RI (refractive index) detector
Polymer for calibration curve: standard polystyrene

### <Production example 1>

97.98 parts of octamethylcyclotetrasiloxane, 1.07 parts of hexamethyldisiloxane, 0.89 parts of tetramethyldisiloxane, 0.05 parts of trifluoromethanesulfonic acid, and 0.0066 parts of water were admixed with each other and the equilibrium polymerization was carried out for 4 hours at 55°C. 0.0058 parts of ammonia was added thereto for neutralization. After removing the impurities by distillation under reduced pressure, a mixture including 50% of a siloxane [Chemical Formula 1] having a silicon-bonded hydrogen atom at one end of the molecular chain, 25% of a siloxane [Chemical Formula 2] having silicon-bonded hydrogen atoms at both ends of the molecular chain, and 25% of a dimethylpolysiloxane [Chemical Formula 3] was obtained.

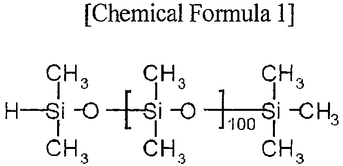

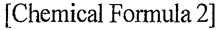

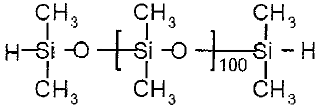

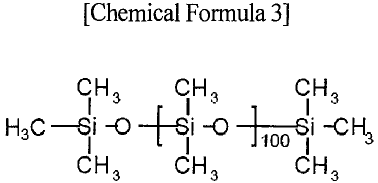

### <Production example 2>

98.95 parts of octamethylcyclotetrasiloxane, 0.54 parts of hexamethyldisiloxane, 0.45 parts of tetramethyldisiloxane, 0.05 parts of trifluoromethanesulfonic acid, and 0.0066 parts of water were admixed with each other and the equilibrium polymerization was carried out for 4 hours at 55°C. 0.0058 parts of ammonia was added thereto for neutralization. After removing the impurities by distillation under reduced pressure, a mixture including 50% of a siloxane [Chemical Formula 4] having a silicon-bonded hydrogen atom at one end of the molecular chain, 25% of a siloxane [Chemical Formula 5] having silicon-bonded hydrogen atoms at both ends of the molecular chain, and 25% of a dimethylpolysiloxane [Chemical Formula 6] was obtained.

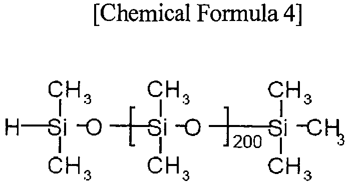

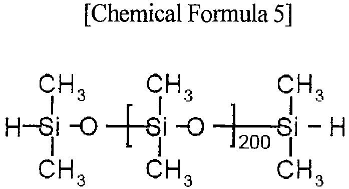

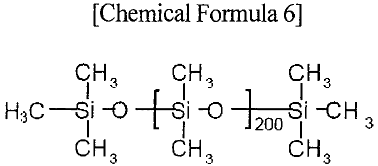

### <Production example 3>

99.28 parts of octamethylcyclotetrasiloxane, 0.36 parts of hexamethyldisiloxane, 0.30 parts of tetramethyldisiloxane, 0.05 parts of trifluoromethanesulfonic acid, and 0.0066 parts of water were admixed with each other and the equilibrium polymerization was carried out for 4 hours at 55°C. 0.0058 parts of ammonia was added thereto for neutralization. After removing the impurities by distillation under reduced pressure, a mixture including 50% of a siloxane [Chemical Formula 7] having a silicon-bonded hydrogen atom at one end of the molecular chain, 25% of a siloxane [Chemical Formula 8] having silicon-bonded hydrogen atoms at both ends of the molecular chain, and 25% of a dimethylpolysiloxane [Chemical Formula 9] was obtained.

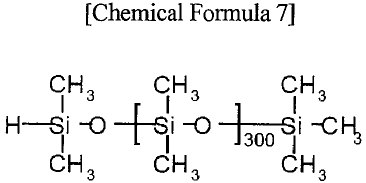

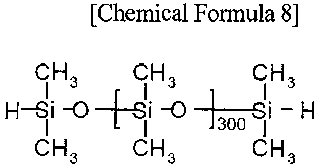

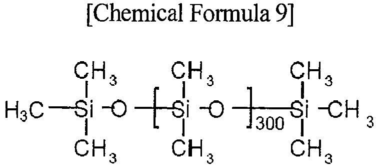

### <Production example 4>

99.44 parts of octamethylcyclotetrasiloxane, 0.27 parts of hexamethyldisiloxane, 0.23 parts of tetramethyldisiloxane, 0.05 parts of trifluoromethanesulfonic acid, and 0.0066 parts of water were admixed with each other and the equilibrium polymerization was carried out for 4 hours at 55°C. 0.0058 parts of ammonia was added thereto for neutralization. After removing the impurities by distillation under reduced pressure, a mixture including 50% of a siloxane [Chemical Formula 10] having a silicon-bonded hydrogen atom at one end of the molecular chain, 25% of a siloxane [Chemical Formula 11] having silicon-bonded hydrogen atoms at both ends of the molecular chain, and 25% of a dimethylpolysiloxane [Chemical Formula 12] was obtained.

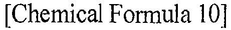

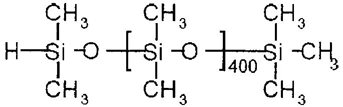

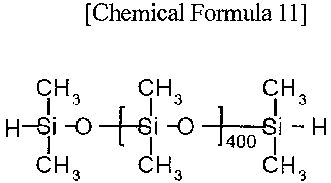

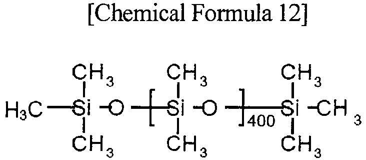

### <Example 1>

94.08 parts of the mixture obtained from Production example 1 including 50% of a siloxane [Chemical Formula 1 having a silicon-bonded hydrogen atom at one end of the molecular chain, 25% of a siloxane [Chemical Formula 2] having silicon-bonded hydrogen atoms at both ends of the molecular chain, and 25% of a dimethylpolysiloxane [Chemical Formula 3], 5.92 parts of CH₂=CH(CH₂)₈COOSi(CH₃)₃, and 0.15 parts of a 10% by weight isopropanol solution of a complex of platinum and 1,3-divinyltetramethyldisiloxane were mixed with each other and reacted for 2 hours at 100°C. After cooling the reaction mixture to 50°C, 1.32 parts of methanol was added thereto and reacted for 30 mins at 50°C for carrying out de-trimethylsilylation. After removing the impurities by distillation under reduced pressure, a mixture (average structural formula: (Me₃SiO_{1/2})₁(Me₂SiO_{2/2})₁₀₀(XMe₂SiO_{1/2})₁, X=C₁₀H₂₀COOH, number average molecular weight: 7500, average silicon-bonded functional group equivalent: 7500, and viscosity: 180 mPas) including 50% of a siloxane [Chemical Formula 13] having a carboxyl group at one end of the molecular chain (silicon-bonded functional group equivalent: 7500), 25% of a siloxane [Chemical Formula 14] having a carboxyl group at both ends of the molecular chain (silicon-bonded functional group equivalent: 3750), and 25% of a dimethylpolysiloxane [Chemical Formula 15] was obtained.

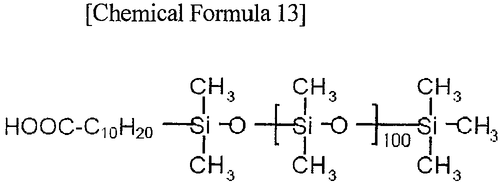

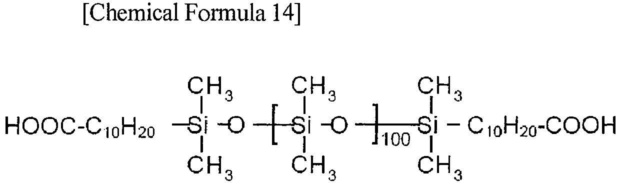

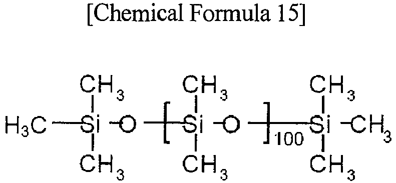

### <Example 2>

96.8 parts of the mixture obtained from Production example 2 including 50% of a siloxane [Chemical Formula 4] having a silicon-bonded hydrogen atom at one end of the molecular chain, 25% of a siloxane [Chemical Formula 5] having silicon-bonded hydrogen atoms at both ends of the molecular chain, and 25% of a dimethylpolysiloxane [Chemical Formula 6], 3.2 parts of CH₂=CH(CH₂)₈COOSi(CH₃)₃, and 0.15 parts of a 10% by weight isopropanol solution of a complex of platinum and 1,3-divinyltetramethyldisiloxane were mixed with each other and reacted for 2 hours at 100°C. After removing the impurities by distillation under reduced pressure, a mixture (average structural formula: (Me₃SiO_{1/2})₁(Me₂SiO_{2/2})₂₀₀(XMe₂SiO_{1/2})₁, X=C₁₀H₂₀COOSiMe₃, number average molecular weight: 15000, average silicon-bonded functional group equivalent: 15000, and viscosity: 600 mPas) including 50% of a siloxane [Chemical Formula 16] having a carboxyl group at one end of the molecular chain (silicon-bonded functional group equivalent: 15000), 25% of a siloxane [Chemical Formula 17] having carboxyl groups at both ends of the molecular chain (silicon-bonded functional group equivalent: 7500), and 25% of a dimethylpolysiloxane [Chemical Formula 18] was obtained.

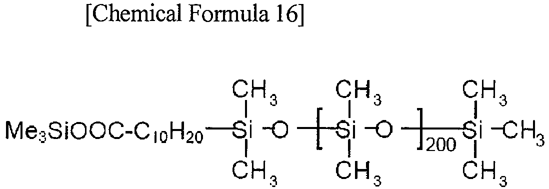

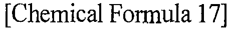

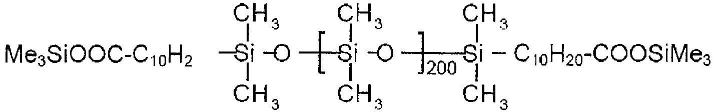

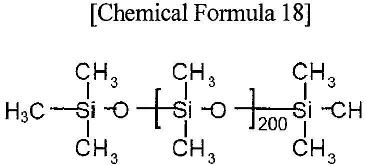

### <Example 3>

96.8 parts of the mixture obtained from Production example 2 including 50% of a siloxane [Chemical Formula 4] having a silicon-bonded hydrogen atom at one end of the molecular chain, 25% of a siloxane [Chemical Formula 5] having silicon-bonded hydrogen atoms at both ends of the molecular chain, and 25% of a dimethylpolysiloxane [Chemical Formula 6], 3.2 parts of CH₂=CH(CH₂)₈COOSi(CH₃)₃, and 0.15 parts of a 10% by weight isopropanol solution of a complex of platinum and 1,3-divinyltetramethyldisiloxane were mixed with each other and reacted for 2 hours at 100°C. After cooling the reaction mixture to 50°C, 1.32 parts of methanol was added thereto and reacted for 30 mins at 50°C for carrying out de-trimethylsilylation. After removing the impurities by distillation under reduced pressure, a mixture (average structural formula: (Me₃SiO_{1/2})₁(Me₂SiO_{2/2})₂₀₀(XMe₂SiO_{1/2})₁, X=C₁₀H₂₀COOH, number average molecular weight: 15000, average silicon-bonded functional group equivalent: 15000, and viscosity: 610 mPas) including 50% of a siloxane [Chemical Formula 19] having a carboxyl group at one end of the molecular chain (silicon-bonded functional group equivalent: 15000), 25% of a siloxane [Chemical Formula 20] having carboxyl groups at both ends of the molecular chain (silicon-bonded functional group equivalent: 7500), and 25% of a dimethylpolysiloxane [Chemical Formula 21] was obtained.

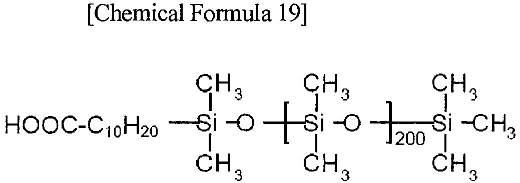

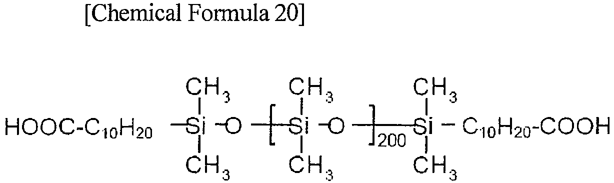

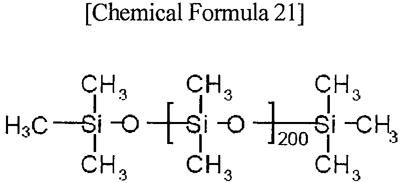

### <Example 4>

97.0 parts of the mixture obtained from Production example 3 including 50% of a siloxane [Chemical Formula 7] having a silicon-bonded hydrogen atom at one end of the molecular chain, 25% of a siloxane [Chemical Formula 8] having silicon-bonded hydrogen atoms at both ends of the molecular chain, and 25% of a dimethylpolysiloxane [Chemical Formula 9], 3.0 parts of CH₂=CH(CH₂)₈COOSi(CH₃)₃, and 0.15 parts of a 10% by weight isopropanol solution of a complex of platinum and 1,3-divinyltetramethyldisiloxane were mixed with each other and reacted for 2 hours at 100°C. After cooling the reaction mixture to 50°C, 0.6 parts of methanol was added thereto and reacted for 30 mins at 50°C for carrying out de-trimethylsilylation. After removing the impurities by distillation under reduced pressure, a mixture (average structural formula:
(Me₃SiO_{1/2})₁(Me₂SiO_{2/2})₃₀₀(XMe₂SiO_{1/2})₁, X=C₁₀H₂₀COOH number average molecular weight: 22500, average silicon-bonded functional group equivalent: 22500, and viscosity: 1075 mPas) including 50% of a siloxane [Chemical Formula 22] having a carboxyl group at one end of the molecular chain (silicon-bonded functional group equivalent: 22500), 25% of a siloxane [Chemical Formula 23] having carboxyl groups at both ends of the molecular chain (silicon-bonded functional group equivalent: 11250), and 25% of a dimethylpolysiloxane [Chemical Formula 24] was obtained.

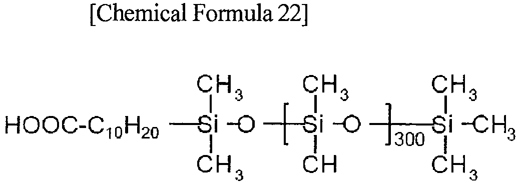

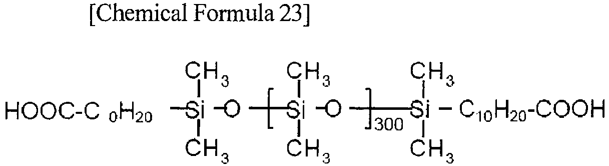

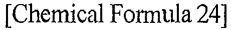

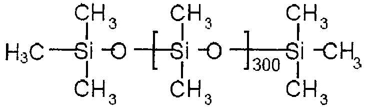

### <Example 5>

97.0 parts of the mixture obtained from Production example 4 including 50% of a siloxane [Chemical Formula 10] having a silicon-bonded hydrogen atom at one end of the molecular chain, 25% of a siloxane [Chemical Formula 11] having silicon-bonded hydrogen atoms at both ends of the molecular chain, and 25% of a dimethylpolysiloxane [Chemical Formula 12], 3.0 parts of CH₂=CH(CH₂)₈COOSi(CH₃)₃, and 0.15 parts of a 10% by weight isopropanol solution of a complex of platinum and 1,3-divinyltetramethyldisiloxane were mixed with each other and reacted for 2 hours at 100°C. After cooling the reaction mixture to 50°C, 1.0 parts of methanol was added thereto and reacted for 30 mins at 50°C for carrying out de-trimethylsilylation. After removing the impurities by distillation under reduced pressure, a mixture (average structural formula:
(Me₃SiO_{1/2})₁(Me₂SiO_{2/2})₄₀₀(XMe₂SiO_{1/2})₁, X=C₁₀H₂₀COOH, number average molecular weight: 30000, average silicon-bonded functional group equivalent: 30000, and viscosity: 2660 mPas) including 50% of a siloxane [Chemical Formula 25] having a carboxyl group at one end of the molecular chain (silicon-bonded functional group equivalent: 30000), 25% of a siloxane [Chemical Formula 26] having carboxyl groups at both ends of the molecular chain (silicon-bonded functional group equivalent: 15000), and 25% of a dimethylpolysiloxane [Chemical Formula 27] was obtained.

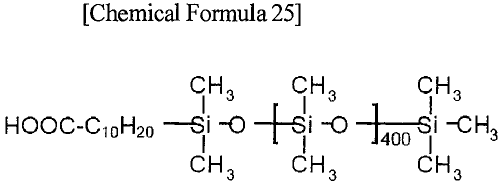

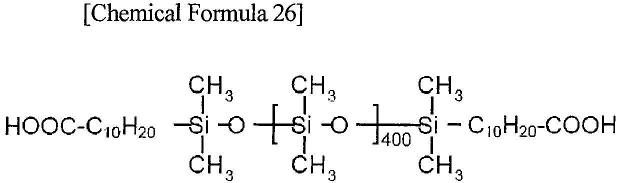

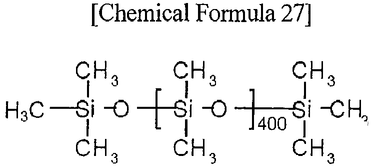

### <Example 6>

98.7 parts of the mixture obtained from Production example 2 including 50% of a siloxane [Chemical Formula 4] having a silicon-bonded hydrogen atom at one end of the molecular chain, 25% of a siloxane [Chemical Formula 5] having silicon-bonded hydrogen atoms at both ends of the molecular chain, and 25% of a dimethylpolysiloxane [Chemical Formula 6], 1.3 parts of CH₂=CHCH₂O(CH₂)₂OH, and 0.15 parts of a 10% by weight isopropanol solution of a complex of platinum and 1,3-divinyltetramethyldisiloxane were mixed with each other and reacted for 2 hours at 100°C. After removing the impurities by distillation under reduced pressure, a mixture (average structural formula: (Me₃SiO_{1/2})₁(Me₂SiO_{2/2})₂₀₀(XMe₂SiO_{1/2})₁, X=(CH₂)₃O(CH₂)₂OH, number average molecular weight: 15000, average silicon-bonded functional group equivalent: 15000, and viscosity: 680 mPas) including 50% of a siloxane [Chemical Formula 28] having a carbinol group at one end of the molecular chain (silicon-bonded functional group equivalent: 15000), 25% of a siloxane [Chemical Formula 29] having carbinol groups at both ends of the molecular chain (silicon-bonded functional group equivalent: 7500), and 25% of a dimethylpolysiloxane [Chemical Formula 30] was obtained.

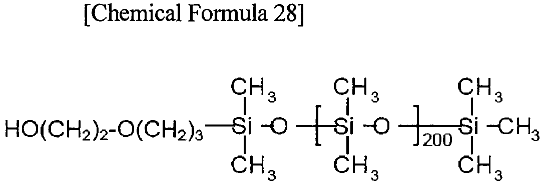

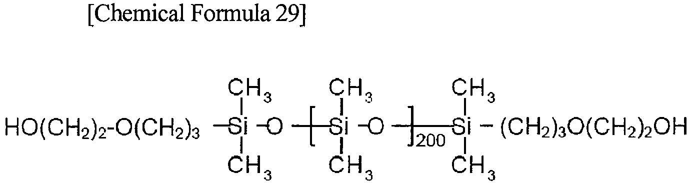

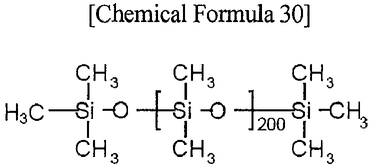

### <Example 7>

98.55 parts of the mixture obtained from Production example 2 including 50% of a siloxane [Chemical Formula 4] having a silicon-bonded hydrogen atom at one end of the molecular chain, 25% of a siloxane [Chemical Formula 5] having silicon-bonded hydrogen atoms at both ends of the molecular chain, and 25% of a dimethylpolysiloxane [Chemical Formula 6], 1.45 parts of an allyl glycidyl ether [Chemical Formula 32], and 0.15 parts of a 10% by weight isopropanol solution of a complex of platinum and 1,3-divinyltetramethyldisiloxane were mixed with each other and reacted for 2 hours at 100°C. After removing the impurities by distillation under reduced pressure, a mixture including 50% of a siloxane [Chemical Formula 33] having an epoxy group at one end of the molecular chain (silicon-bonded functional group equivalent: 15000), 25% of a siloxane [Chemical Formula 34] having epoxy groups at both ends of the molecular chain (silicon-bonded functional group equivalent: 7500), and 25% of a dimethylpolysiloxane [Chemical Formula 35] was obtained. The mixture had an average structural formula: (Me₃SiO_{1/2})₁(Me₂SiO_{1/2})₁ (wherein X = 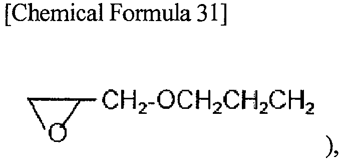 number average molecular weight: 15000, average silicon-bonded functional group equivalent: 15000, and viscosity: 560 mPas).

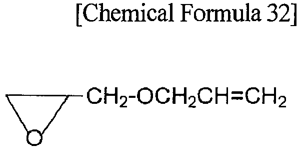

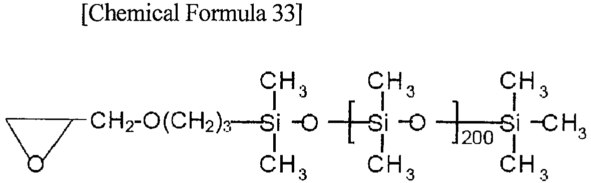

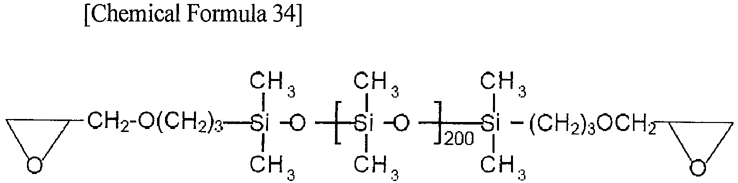

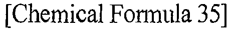

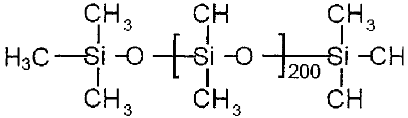

### <Example 8>

95.42 parts of octamethylcyclotetrasiloxane, 1.82 parts of a siloxane [Chemical Formula 36] having amino groups at both ends of the molecular chain, 2.71 parts of a dimethylpolysiloxane [Chemical Formula 37], and 0.015 parts of potassium hydroxide were mixed with each other and reacted for 7 hours at 140°C for equilibrium polymerization. 0.03 parts of acetic acid was added thereto for neutralization. After removing the impurities by distillation under reduced pressure, a mixture (average structural formula: (Me₃SiO_{1/2})₁(Me₂SiO_{2/2})₃₃₄(XMe₂SiO_{1/2})₁, X = C₃H₆NH₂, number average molecular weight: 25000, average silicon-bonded functional group equivalent: 25000, and viscosity: 1490 mPas) including 50% of a siloxane [Chemical Formula 38] having an amino group at one end of the molecular chain (amino equivalent: 25000), 25% of a siloxane [Chemical Formula 39] having amino groups at both ends of the molecular chain (silicon-bonded functional group equivalent: 12500), and 25% of a dimethylpolysiloxane [Chemical Formula 40] was obtained.

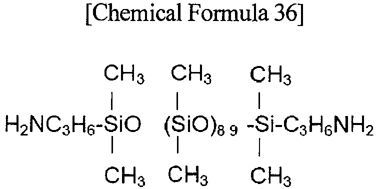

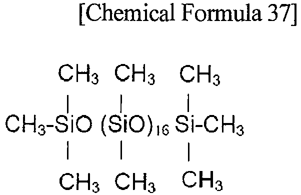

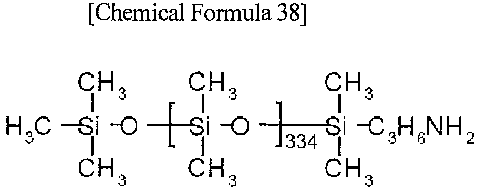

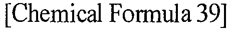

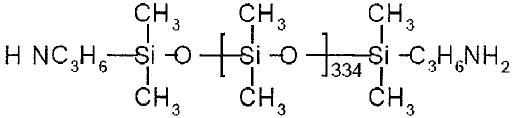

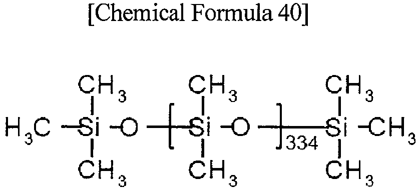

### <Example 9>

96.36 parts of octamethylcyclotetrasiloxane, 3.64 parts of a siloxane [Chemical Formula 36] having amino groups at both ends of the molecular chain, and 0.015 parts of potassium hydroxide were mixed with each other and reacted for 7 hours at 140°C for equilibrium polymerization. 0.03 parts of acetic acid was added thereto for neutralization. After removing the impurities by distillation under reduced pressure, a siloxane [Chemical Formula 39] having amino groups at both ends of the molecular chain (average structural formula: (XMe₂SiO_{1/2})₂(Me₂SiO_{2/2})₃₃₄, X = C₃H₆NH₂, number average molecular weight: 25000, silicon-bonded functional group equivalent: 12500, and viscosity: 1750 mPas) was obtained.

### <Example 10>

96.63 parts of an organopolysiloxane [Chemical Formula 41] having hydroxyl groups at ends of the molecular chain and 3.37 parts of aminoethylaminopropylmethyldimethoxysilane were mixed with each other and reacted for 4 hours at 100°C under nitrogen atmosphere. As a result, a polyorganosiloxane containing amino groups (silicon-bonded functional group equivalent: 6000) was obtained.

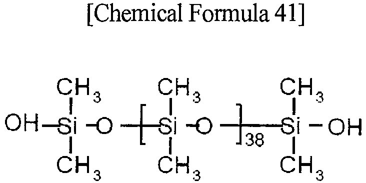

### <Example 11>

98.36 parts of an organopolysiloxane [Chemical Formula 42] having hydroxyl groups at ends of the molecular chain and 1.64 parts of aminoethylaminopropylmethyldimethoxysilane were mixed with each other and reacted for 4 hours at 100°C under nitrogen atmosphere. As a result, a polyorganosiloxane containing amino groups (silicon-bonded functional group equivalent: 12500) was obtained.

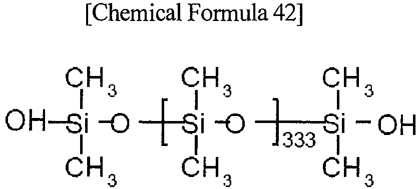

### <Example 12>

99.17 parts of an organopolysiloxane [Chemical Formula 42] having hydroxyl groups at ends of the molecular chain and 0.83 parts of aminoethylaminopropylmethyldimethoxysilane were mixed with each other and reacted for 4 hours at 100°C under nitrogen atmosphere. As a result, a polyorganosiloxane containing amino groups (silicon-bonded functional group equivalent: 25000) was obtained.

### <Example 13>

99.59 parts of an organopolysiloxane [Chemical Formula 42] having hydroxyl groups at ends of the molecular chain and 0.41 parts of aminoethylaminopropylmethyldimethoxysilane were mixed with each other and reacted for 4 hours at 100°C under nitrogen atmosphere. As a result, a polyorganosiloxane containing amino groups (average structural formula:
((HO)Me₂SiO_{1/2})_{1.54}(Me₂SiO_{2/2})₃₄₃(XMe(OMe)SiO_{1/2})_{0.46}, X = C₃H₆NHC₂H₄NH₂, silicon-bonded functional group equivalent: 50000, and viscosity: 2960 mPas) was obtained.

### <Example 14>

99.79 parts of an organopolysiloxane [Chemical Formula 42] having hydroxyl groups at ends of the molecular chain and 0.21 parts of aminoethylaminopropylmethyldimethoxysilane were mixed with each other and reacted for 4 hours at 100°C under nitrogen atmosphere. As a result, a polyorganosiloxane containing amino groups (silicon-bonded functional group equivalent: 100,000, and viscosity: 2600 mPas) was obtained.

### <Example 15>

98.64 parts of an organopolysiloxane [Chemical Formula 43] having hydroxyl groups at ends of the molecular chain and 1.36 parts of aminoethylaminopropylmethyldimethoxysilane were mixed with each other and reacted for 4 hours at 100°C under nitrogen atmosphere. As a result, a polyorganosiloxane containing amino groups (silicon-bonded functional group equivalent: 15000) was obtained.

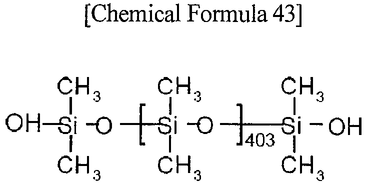

### <Example 16>

99.32 parts of an organopolysiloxane [Chemical Formula 43] having hydroxyl groups at ends of the molecular chain and 0.68 parts of aminoethyl aminopropyl methyl dimethoxysilane were mixed with each other and reacted for 4 hours at 100°C under nitrogen atmosphere. As a result, a polyorganosiloxane containing amino groups (silicon-bonded functional group equivalent: 30000) was obtained.

### <Example 17>

99.66 parts of an organopolysiloxane [Chemical Formula 43] having hydroxyl groups at ends of the molecular chain and 0.34 parts of aminoethylaminopropylmethyldimethoxysilane were mixed with each other and reacted for 4 hours at 100°C under nitrogen atmosphere. As a result, a polyorganosiloxane containing amino groups (average structural formula:
((HO)Me₂SiO_{1/2})_{1.57}(Me₂SiO_{2/2})₄₁₂(XMe(OMe)SiO_{1/2})_{0.43}, X = C₃H₆NHC₂H₄NH₂, silicon-bonded functional group equivalent: 60000, and viscosity: 4460 mPas) was obtained.

### <Example 18>

84 parts of an organopolysiloxane [Chemical Formula 43] having hydroxyl groups at ends of the molecular chain, 15 parts of an organopolysiloxane [Chemical Formula 44] having hydroxyl groups at ends of the molecular chain, and 1 part of aminoethylaminopropylmethyldimethoxysilane were mixed with each other and reacted for 4 hours at 100°C under nitrogen atmosphere. As a result, a polyorganosiloxane containing amino groups (silicon-bonded functional group equivalent: 20000) was obtained.

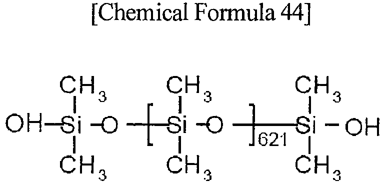

### <Example 19>

99.47 parts of an organopolysiloxane [Chemical Formula 42] having hydroxyl groups at ends of the molecular chain and 0.53 parts of aminoethylaminopropyltriethoxysilane were mixed with each other and reacted for 4 hours at 100°C under nitrogen atmosphere. As a result, a polyorganosiloxane containing amino groups (average structural formula:
((HO)Me₂SiO_{1/2})_{1.71}(Me₂SiO_{2/2})₃₅₅(X(OEt)₂SiO_{1/2})_{0.29}, X = C₃H₆NHC₂H₄NH₂, silicon-bonded functional group equivalent: 50000, and viscosity: 2820 mPas) was obtained.

### <Example 20>

100 parts of the mixture obtained from Example 2 (average structural formula:
(Me₃SiO_{1/2})₁(Me₂SiO_{2/2})₂₀₀(XMe₂SiO_{1/2})₁, X = C₁₀H₂₀COOSiMe₃, number average molecular weight: 15000, average silicon-bonded functional group equivalent: 15000, and viscosity: 600 mPas) including 50% of a siloxane [Chemical Formula 16] having a carboxyl group at one end of the molecular chain (silicon-bonded functional group equivalent: 15000), 25% of a siloxane [Chemical Formula 17] having carboxyl groups at both ends of the molecular chain (silicon-bonded functional group equivalent: 7500), and 25% of a dimethylpolysiloxane [Chemical Formula 18], and 100 parts of a dimethylpolysiloxane of the following formula (number average molecular weight: 8800) were mixed with each other to obtain a mixture (average structural formula:
(Me₃SiO_{1/2})_{1.5}(Me₂SiO_{2/2})_{158.5}(XMe₂SiO_{1/2})_{0.5}, X = C₁₀H₂₀COOSiMe₃, number average molecular weight: 12000, average silicon-bonded functional group equivalent: 24000).

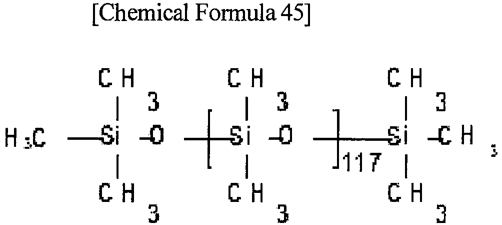

### <Example 21 >

100 parts of the mixture obtained from Example 2 (average structural formula:
(Me₃SiO_{1/2})₁(Me₂SiO_{2/2})₂₀₀(XMe₂SiO_{1/2})₁, X = C₁₀H₂₀COOSiMe₃, number average molecular weight: 15000, average silicon-bonded functional group equivalent: 15000, and viscosity: 600 mPas) including 50% of a siloxane [Chemical Formula 16] having a carboxyl group at one end of the molecular chain (silicon-bonded functional group equivalent: 15000), 25% of a siloxane [Chemical Formula 17] having carboxyl groups at both ends of the molecular chain (silicon-bonded functional group equivalent: 7500), and 25% of a dimethylpolysiloxane [Chemical Formula 18], and 100 parts of a dimethylpolysiloxane of the following formula (number average molecular weight: 1800) were mixed with each other to obtain a mixture (average structural formula:
(Me₃SiO_{1/2})_{1.5}(Me₂SiO_{2/2})₁₁₁(XMe₂SiO_{1/2})_{0.5}, X = C₁₀H₂₀COOSiMe₃, number average molecular weight: 8500, average silicon-bonded functional group equivalent: 17000).

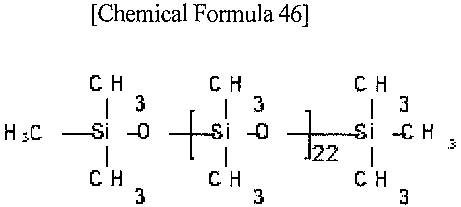

### <Comparative Example 1>

Siloxane [Chemical Formula 46] having carboxyl groups at both ends of the molecular chain (silicon-bonded functional group equivalent: 520).

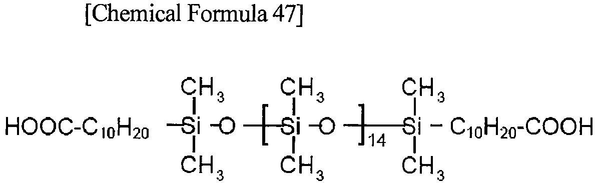

### <Comparative Example 2>

Organopolysiloxane [Chemical Formula 36] having amino groups at both ends of the molecular chain (silicon-bonded functional group equivalent: 330).

### <Comparative Example 3>

87.77 parts of an organopolysiloxane [Chemical Formula 41] having hydroxyl groups at ends of the molecular chain and 12.23 parts of aminoethylaminopropylmethyldimethoxysilane were mixed with each other and reacted for 4 hours at 100°C under nitrogen atmosphere. As a result, a polyorganosiloxane containing amino groups (silicon-bonded functional group equivalent: 1500) was obtained.

### <Comparative Example 4>

Organopolysiloxane [Chemical Formula 41] having hydroxyl groups at ends of the molecular chain.

### <Comparative Example 5>

Organopolysiloxane [Chemical Formula 42] having hydroxyl groups at ends of the molecular chain.

### <Comparative Example 6>

A dimethylpolysiloxane of the following formula (number average molecular weight: 8800).

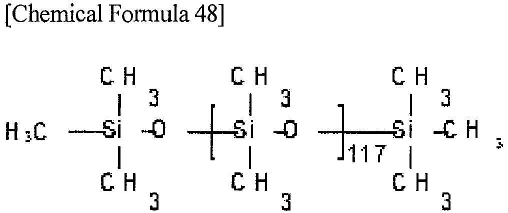

By using each of silicone (in the form of oil) substances of Examples 1 to 21 and Comparative Examples 1 to 6, the releasability was evaluated in the following manner. The results are summarized in Table 1 to Table 3.

### [Evaluation of Releasability]

A stainless steel plate (150 mm x 50 mm) chosen as a surface of a roll or the like was provided and heated to 100°C. Subsequently, to one surface of the heated stainless steel plate, about 0.06 g of each of the silicone oils of Examples 1 to 21 and Comparative Examples 1 to 6 was uniformly applied. Immediately after the application, a commercially available adhesive fabric tape, which was chosen as a wet paper containing impure materials, was applied to the aforementioned application surface, while the fabric tape was pressed by a palm and thus air was removed. In addition, after the plate with the fabric tape was allowed to stand for 25 minutes in an oven at 105°C, the fabric tape was peeled rapidly with bare hands. The degree of peeling at that time was evaluated in view of sensations in the hand on the basis of the following four criteria:
1. The tape was extremely easily peeled, and the peeled surface was also good (excellent).
2. The tape was easily peeled, and the peeled surface might be also reused (good).
3. The tape was peeled, but the peeled surface might not be reused (non-usable).
4. The tape could not be peeled, or even if the tape was forced to be peeled, reuse thereof was impossible (tight adhesion).
As a control, the case in which no silicone oil was applied was also evaluated.

[Table 1]

**Table 1**

| | | | | | | | | | | |
|---|---|---|---|---|---|---|---|---|---|---|
| Example | 1 | 2 | 3 | 4 | 5 | 6 | 7 | 8 | 9 | 10 |
| Releasability | 1 | 1 | 1 | 2 | 2 | 2 | 2 | 1 | 2 | 2 |

[Table 2]

**Table 2**

| | | | | | | | | | | | |
|---|---|---|---|---|---|---|---|---|---|---|---|
| Example | 11 | 12 | 13 | 14 | 15 | 16 | 17 | 18 | 19 | 20 | 21 |
| Releasability | 1 | 1 | 1 | 1 | 1 | 1 | 1 | 1 | 1 | 1 | 2 |

[Table 3]

**Table 3**

| | | | | | | | |
|---|---|---|---|---|---|---|---|
| Comparative Example | 1 | 2 | 3 | 4 | 5 | 6 | Control |
| Releasability | 4 | 4 | 4 | 4 | 4 | 4 | 4 |

As it is clearly shown in Table 1 and Table 2, the silicone oils of Examples 1 to 21, which correspond to the contamination inhibitors of the present invention, have good releasability even under high temperature conditions. That is, any one of the silicone oils having carboxyl groups of Examples 1 to 5, the silicone having carbinol groups of Example 6, the silicone oil having epoxy groups of Example 7, and the silicone oils having amino groups of Examples 8 to 21 exhibits good releasability under high temperature conditions.

Meanwhile, as it is clearly shown in Table 3, the silicone oils in which silicon-bonded functional group equivalent is less than 3000 show poor releasability under high temperature conditions. That is, the silicone oil having carboxyl groups of Comparative Example 1 and the silicone oils having amino groups of Comparative Examples 2 and 3, all having small silicon-bonded functional group equivalents, show poor releasability under high temperature conditions. Further, the silicone oils having silicon-bonded hydroxyl groups of Comparative Examples 4 and 5 and dimethylpolysiloxanes, both having small silicon-bonded functional group equivalents, also show insufficient releasability under high temperature conditions.

### <Example 22>

15 parts of the mixture obtained from Example 3 including 50% of a siloxane [Chemical Formula 19] having a carboxyl group at one end of the molecular chain (silicon-bonded functional group equivalent: 15000), 25% of a siloxane [Chemical Formula 20] having carboxyl groups at both ends of the molecular chain (silicon-bonded functional group equivalent: 7500), and 25% of a dimethylpolysiloxane [Chemical Formula 21], 5 parts ofpolyoxyethylene (14 moles) 2-propyl heptyl ether (HLB = 15.9), and 5 parts of water were mixed with each other, and emulsification was carried out by using a continuous mixing apparatus. 74.94 parts of water was added for dilution, and as a pH adjusting agent, 0.01 parts of sodium carbonate and 0.05 parts of sodium benzoate were added to give a milky white emulsion having a particle diameter of 158 nm.

### <Example 23>

15 parts of the mixture obtained from Example 3 including 50% of a siloxane [Chemical Formula 19] having a carboxyl group at one end of the molecular chain (silicon-bonded functional group equivalent: 15000), 25% of a siloxane [Chemical Formula 20] having carboxyl groups at both ends of the molecular chain (silicon-bonded functional group equivalent: 7500), and 25% of a dimethylpolysiloxane [Chemical Formula 21], 5 parts ofpolyoxyethylene (15 moles) isodecyl ether (HLB =16.1), and 5 parts of water were mixed with each other, and emulsification was carried out by using a continuous mixing apparatus. 74.94 parts of water was added for dilution, and as a pH adjusting agent, 0.01 parts of sodium carbonate and 0.05 parts of sodium benzoate were added to give a milky white emulsion having a particle diameter of 187 nm.

### <Example 24>

15 parts of the mixture obtained from Example 3 including 50% of a siloxane [Chemical Formula 19] having a carboxyl group at one end of the molecular chain (silicon-bonded functional group equivalent: 15000), 25% of a siloxane [Chemical Formula 20] having carboxyl groups at both ends of the molecular chain (silicon-bonded functional group equivalent: 7500), and 25% of a dimethylpolysiloxane [Chemical Formula 21], 3.3 parts of a 60% aqueous solution of polyoxyethylene (50 moles) undecyl ether (HLB = 18.5), 3.5 parts of a 85% aqueous solution of polyoxyethylene (7 moles) 2-propyl heptyl ether (HLB = 11.9), and 3.2 parts of water were mixed with each other, and emulsification was carried out by using a continuous mixing apparatus. 74.94 parts of water was added for dilution, and as a pH adjusting agent, 0.01 parts of sodium carbonate and 0.05 parts of sodium benzoate were added to give a milky white emulsion having a particle diameter of 111 nm.

### <Example 25>

18 parts of the mixture obtained from Example 2 including 50% of a siloxane [Chemical Formula 16] having a carboxyl group at one end of the molecular chain (silicon-bonded functional group equivalent: 15000), 25% of a siloxane [Chemical Formula 17] having carboxyl groups at both ends of the molecular chain (silicon-bonded functional group equivalent: 7500), and 25% of a dimethylpolysiloxane [Chemical Formula 18], 3.3 parts of a 60% aqueous solution of polyoxyethylene (50 moles) undecyl ether (HLB =18.5), 3.5 parts of a 85% aqueous solution of polyoxyethylene (7 moles) 2-propyl heptyl ether (HLB = 11.9), and 3.2 parts of water were mixed with each other, and emulsification was carried out by using a continuous mixing apparatus. 74.94 parts of water was added for dilution, and as a pH adjusting agent, 0.01 parts of sodium carbonate and 0.05 parts of sodium benzoate were added to give a milky white emulsion having a particle diameter of 246 nm.

### <Example 26>

15 parts of the mixture obtained from Example 8, 5 parts of polyoxyethylene (14 moles) 2-propyl heptyl ether (HLB =15.9), and 5 parts of water were mixed with each other, and emulsification was carried out by using a continuous mixing apparatus. 74.9 parts of water was added for dilution. After that, 0.05 parts of 80% acetic acid was added to give a milky white emulsion having a particle diameter of 229 nm.

### <Example 27>

18 parts of the mixture obtained from Example 8, 3.3 parts of a 60% aqueous solution of polyoxyethylene (50 moles) undecyl ether (HLB = 18.5), 3.5 parts of a 85% aqueous solution of polyoxyethylene (7 moles) 2-propyl heptyl ether (HLB =11.9), and 3.2 parts of water were mixed with each other, and emulsification was carried out by using a continuous mixing apparatus. 71.93 parts of water was added for dilution. After that, 0.05 parts of 80% acetic acid was added to give a milky white emulsion having a particle diameter of 201 nm.

### <Example 28>

A milky white emulsion was obtained in the same manner as Example 25 except that the mixture obtained from Example 8 was changed to a polyorganosiloxane having amino groups that was obtained from Example 13. The emulsion obtained has particle diameter of 223 nm.

### <Example 29>

A milky white emulsion was obtained in the same manner as Example 24 except that the mixture obtained from Example 8 was changed to a siloxane [Chemical Formula 39] having amino groups that was obtained from Example 9. The emulsion obtained has particle diameter of 225 nm.

### <Example 30>

15 parts of the mixture obtained from Example 3 including 50% of a siloxane [Chemical Formula 19] having a carboxyl group at one end of the molecular chain (silicon-bonded functional group equivalent: 15000), 25% of a siloxane [Chemical Formula 20] having carboxyl groups at both ends of the molecular chain (silicon-bonded functional group equivalent: 7500), and 25% of a dimethylpolysiloxane [Chemical Formula 21], 5.9 parts of a 85% aqueous solution of polyoxyethylene (7 moles) 2-propyl heptyl ether (HLB = 11.9), and 4.1 parts of water were mixed with each other, and emulsification was carried out by using a continuous mixing apparatus. 74.95 parts of water was added for dilution. After that, 0.05 parts of 80% acetic acid was added to give a milky white emulsion having a particle diameter of 99 nm.

### <Example 31>

15 parts of the mixture including a siloxane having amino groups at ends of the molecular chain obtained from Example 8, 5.9 parts of a 85% aqueous solution of polyoxyethylene (7 moles) 2-propyl heptyl ether (HLB = 11.9), and 4.1 parts of water were mixed with each other, and emulsification was carried out by using a continuous mixing apparatus. 74.95 parts of water was added for dilution. After that, 0.05 parts of 80% acetic acid was added to give a milky white emulsion having a particle diameter of 227 nm.

### <Example 32>

An emulsion with a particle diameter of 111 nm was obtained in the same manner as Example 24 except that the emulsification was carried out by further adding 4 parts of an oxyalkylene-modified silicone (HLB =11.5) having the following formula:
(CH₃)₃SiO((CH₃)₂SiO)_{8.5}((CH₃)Y²SiO)_{2.3}Si(CH₃)₃ (wherein Y² = -(CH₂)₃-(OC₂H₄)₁₂-OH).

The average particle diameter of the emulsion particles of Examples 22 to 32 was obtained by measuring the particle diameter distribution with a sub-micron particle analyzer (trade name: COULTER MODEL N4 MD, manufactured by COULTER ELECTRONICS) and calculating the average particle diameter.

By using each of the silicone emulsions of Examples 22 to 32, the releasability and stability at high temperature were evaluated in the following manner. The results are summarized in Table 4.

### [Evaluation of Releasability]

A stainless steel plate (150 mm x 50 mm) chosen as a surface of a roll or the like was provided and heated to 100°C. Subsequently, to one surface of the heated stainless steel plate, about 0.06 g of each of the silicone emulsions of Examples 22 to 31 was uniformly applied. Immediately after the application, a commercially available adhesive fabric tape, which was chosen as a wet paper containing impure materials, was applied to the aforementioned application surface, while the fabric tape was pressed by a palm and thus air was removed. In addition, after the plate with the fabric tape was allowed to stand for 25 minutes in an oven at 105°C, the fabric tape was peeled rapidly with bare hands. The degree of peeling at that time was evaluated in view of sensations in the hand on the basis of the following four criteria:
1. The tape was extremely easily peeled, and the peeled surface was also good (excellent).
2. The tape was easily peeled, and the peeled surface might be also reused (good).
3. The tape was peeled, but the peeled surface might not be reused (non-usable).
4. The tape could not be peeled, or even if the tape was forced to be peeled, reuse thereof was impossible (tight adhesion).

### [Evaluation of Stability at High Temperature]

100 g of the silicone emulsion of each of Examples 22 to 32, which was diluted to have a silicone amount of 8%, was added to a glass container with volume of 100 cc. After sealing, the container was stored in an oven at 80°C, and then any separation of the emulsion was determined with the naked eye. Evaluation was made according to the following criteria:
○: stable for 12 or longer hours
Δ: separation after 3 hours.

[Table 4]

**Table 4**

| | | | | | | | | | | | |
|---|---|---|---|---|---|---|---|---|---|---|---|
| Example | 22 | 23 | 24 | 25 | 26 | 27 | 28 | 29 | 30 | 31 | 32 |
| Releasability | 1 | 1 | 1 | 1 | 1 | 1 | 1 | 2 | 1 | 1 | 1 |
| Stability at high temperature | ○ | ○ | ○ | ○ | ○ | ○ | ○ | ○ | Δ | Δ | ○ |

As it is clearly shown in Table 4, the contamination inhibitors of the present invention have excellent releasability even when they are in an emulsion form. In particular, the emulsions emulsified by using a nonionic surfactant having a 13 or higher HLB have particularly excellent stability under high temperature conditions.

## Claims

1. A contamination inhibitor comprising at least one polyorganosiloxane that has silicon-bonded functional groups and that has a number average molecular weight of 3,000 to 500,000 in terms of standard polystyrene as determined by gel permeation chromatography and a silicon-bonded functional group equivalent (a number average molecular weight per mol of the silicon-bonded functional groups) of 3,000 to 500,000 on average.

2. The contamination inhibitor according to claim 1, wherein the polyorganosiloxane that has silicon-bonded functional groups has a linear molecular structure or a linear molecular structure having a partial branch.

3. The contamination inhibitor according to claim 1 or 2, wherein the silicon-bonded functional groups are selected from the group consisting of a carboxyl group, an epoxy group, a carbinol group, an amino group, an amide group, a mercapto group, and a phenol group.

4. The contamination inhibitor according to claim 3, wherein the carboxyl group is represented by the following formula: -R¹-COOQ (wherein R¹ represents a divalent hydrocarbon group; and Q represents a hydrogen atom, an alkali metal, ammonium, or the formula: -Si(CH₃)₃).

5. The contamination inhibitor according to claim 3, wherein the epoxy group is selected from the group consisting of a glycidoxyalkyl group, an epoxy cycloalkylalkyl group, and an oxiranylalkyl group.

6. The contamination inhibitor according to claim 3, wherein the carbinol group is represented by the following formula: -R²-OH or -R²-O-R³-OH (wherein R² and R³ each independently represents a divalent hydrocarbon group).

7. The contamination inhibitor according to claim 3, wherein the amino group or amide group is represented by the formula: -R⁴-(NR⁵CH₂CH₂)₁-NR⁶R⁷ {wherein R⁴ represents a divalent hydrocarbon group; R⁵, R⁶, and R⁷ each independently represents a hydrogen atom, a monovalent hydrocarbon group, an acyl group, or a group represented by the following formula: -CH₂CH(OH)R⁸ (wherein R⁸ represents a hydrogen atom, a monovalent hydrocarbon group, or an acyl group); and 1 is an integer of 0 to 5}.

8. (Amended) The contamination inhibitor according to claim 3, wherein the polyorganosiloxane that has silicon-bonded functional groups is represented by an average unit formula as follows:
(R₃SiO_{1/2})ₐ(XR₂SiO_{1/2})_{b}(R₂SiO_{2/2})_{c}(XRSiO_{2/2})_{d}(RSiO_{3/2})ₑ(XSiO_{3/2})_{f}(SiO_{4/2})_{g},
wherein a represents a number from 0 to 50; b represents a number from 0 to 50; c represents a number from 30 to 2700; d represents a number from 0 to 50; e represents a number from 0 to 50; f represents a number from 0 to 50; g represents a number from 0 to 10; b + d + f represents a number from 0.01 to 100; a + b + c + d + e + f + g represents a number from 30 to 2700; R each independently represents a monovalent hydrocarbon group, an alkoxy group having 1 to 5 carbon atoms, or a hydroxyl group; and X represents a group selected from the group consisting of a carboxyl group, an epoxy group, a carbinol group, an amino group, an amide group, a mercapto group, and a phenol group.

9. The contamination inhibitor according to any one of claims 1 to 8, wherein the polyorganosiloxane that has silicon-bonded functional groups is obtained by hydrosilylation of:
(A) a polyorganosiloxane having silicon-bonded hydrogen atoms; and
(B) an organic compound having unsaturated aliphatic groups.

10. The contamination inhibitor according to any one of claims 1 to 8, wherein the polyorganosiloxane that has silicon-bonded functional groups is obtained by equilibrium polymerization of:
(C) a cyclic polyorganosiloxane; and
(D) a polyorganosiloxane that has silicon-bonded functional groups.

11. The contamination inhibitor according to any one of claims 1 to 8, wherein the polyorganosiloxane that has silicon-bonded functional groups is obtained by condensation of:
(E) a diorganopolysiloxane of which both ends of the molecular chain are blocked with hydroxyl groups, represented by the following formula: HO-(SiR⁹₂O)ₓ-H (wherein R⁹ represents a monovalent hydrocarbon group; and x is a number of 5 to 2700); and
(F) an amino group-containing organoalkoxysilane represented by the following formula: R¹⁰ₙR¹¹Si(OR¹²)₃₋ₙ (wherein R¹⁰ represents a monovalent hydrocarbon group; R¹¹ represents the following formula: -R¹³-(NR¹⁴CH₂CH₂)ₘ-NH-R¹⁵ (wherein R¹³ represents a divalent hydrocarbon group; R¹⁴ and R¹⁵ each independently represents a hydrogen atom or a monovalent hydrocarbon group; and m is an integer of 0 to 5); R¹² represents a monovalent hydrocarbon group; and n is 0 or 1).

12. The contamination inhibitor according to any one of claims 1 to 11, which is in the form of an oil-in-water emulsion or a water-in-oil emulsion.

13. The contamination inhibitor according to claim 12, further comprising at least one nonionic surfactant.

14. The contamination inhibitor according to any one of claims 1 to 13, used for preventing or reducing adhesion of contaminants to a substrate.

15. The contamination inhibitor according to any one of claims 1 to 14, used for a paper machine.

16. A method for preventing or reducing adhesion of contaminants to a substrate, the method comprising:
applying, to a surface of the substrate, at least one polyorganosiloxane that has silicon-bonded functional groups and that has a number average molecular weight of 3,000 to 500,000 in terms of standard polystyrene as determined by gel permeation chromatography and a silicon-bonded functional group equivalent (a number average molecular weight per mol of the silicon-bonded functional groups) of 3,000 to 500,000 on average.

17. Use of at least one polyorganosiloxane that has silicon-bonded functional groups for preventing or reducing adhesion of contaminants to a substrate, wherein the polyorganosiloxane has a number average molecular weight of 3,000 to 500,000 in terms of standard polystyrene as determined by gel permeation chromatography and has a silicon-bonded functional group equivalent (a number average molecular weight per mol of the silicon-bonded functional groups) of 3,000 to 500,000 on average.

18. A polyorganosiloxane that has silicon-bonded functional groups for preventing or reducing adhesion of contaminants to a substrate, wherein the polyorganosiloxane has a number average molecular weight of 3,000 to 500,000 in terms of standard polystyrene as determined by gel permeation chromatography and has a silicon-bonded functional group equivalent (a number average molecular weight per mol of the silicon-bonded functional groups) of 3,000 to 500,000 on average.

## Amended claims

### Amended claims under Art. 19.1 PCT

**1.** A contamination inhibitor comprising at least one polyorganosiloxane that has silicon-bonded functional groups and that has a number average molecular weight of 3,000 to 500,000 in terms of standard polystyrene as determined by gel permeation chromatography and a silicon-bonded functional group equivalent (a number average molecular weight per mol of the silicon-bonded functional groups) of 3,000 to 500,000 on average.

**2.** The contamination inhibitor according to claim 1, wherein the polyorganosiloxane that has silicon-bonded functional groups has a linear molecular structure or a linear molecular structure having a partial branch.

**3.** The contamination inhibitor according to claim 1 or 2, wherein the silicon-bonded functional groups are selected from the group consisting of a carboxyl group, an epoxy group, a carbinol group, an amino group, an amide group, a mercapto group, and a phenol group.

**4.** The contamination inhibitor according to claim 3, wherein the carboxyl group is represented by the following formula: -R¹-COOQ (wherein R¹ represents a divalent hydrocarbon group; and Q represents a hydrogen atom, an alkali metal, ammonium, or the formula: -Si(CH₃)₃).

**5.** The contamination inhibitor according to claim 3, wherein the epoxy group is selected from the group consisting of a glycidoxyalkyl group, an epoxy cycloalkylalkyl group, and an oxiranylalkyl group.

**6.** The contamination inhibitor according to claim 3, wherein the carbinol group is represented by the following formula: -R²-OH or -R²-O-R³-OH (wherein R² and R³ each independently represents a divalent hydrocarbon group).

**7.** The contamination inhibitor according to claim 3, wherein the amino group or amide group is represented by the formula: -R⁴-(NR⁵CH₂CH₂)₁-NR⁶R⁷ {wherein R⁴ represents a divalent hydrocarbon group; R⁵, R⁶, and R⁷ each independently represents a hydrogen atom, a monovalent hydrocarbon group, an acyl group, or a group represented by the following formula: -CH₂CH(OH)R⁸ (wherein R⁸ represents a hydrogen atom, a monovalent hydrocarbon group, or an acyl group); and 1 is an integer of 0 to 5}.

**8.** The contamination inhibitor according to claim 3, wherein the polyorganosiloxane that has silicon-bonded functional groups is represented by an average unit formula as follows:
(R₃SiO_{1/2})ₐ(XR₂SiO_{1/2})_{b}(R₂SiO_{2/2})_{c}(XRSiO_{2/2})_{d}(RSiO_{3/2})ₑ(XSiO_{3/2})_{f}(SiO_{4/2})_{g}
wherein a represents a number from 0 to 50; b represents a number from 0 to 50; c represents a number from 30 to 2700; d represents a number from 0 to 50; e represents a number from 0 to 50; f represents a number from 0 to 50; g represents a number from 0 to 10; b + d + f represents a number from 0.5 0.01 to 100; a + b + c + d + e + f + g represents a number from 30 to 2700; R each independently represents a monovalent hydrocarbon group, an alkoxy group having 1 to 5 carbon atoms, or a hydroxyl group; and X represents a group selected from the group consisting of a carboxyl group, an epoxy group, a carbinol group, an amino group, an amide group, a mercapto group, and a phenol group.

**9.** The contamination inhibitor according to any one of claims 1 to 8, wherein the polyorganosiloxane that has silicon-bonded functional groups is obtained by hydrosilylation of:
(A) a polyorganosiloxane having silicon-bonded hydrogen atoms; and
(B) an organic compound having unsaturated aliphatic groups.

**10.** The contamination inhibitor according to any one of claims 1 to 8, wherein the polyorganosiloxane that has silicon-bonded functional groups is obtained by equilibrium polymerization of:
(C) a cyclic polyorganosiloxane; and
(D) a polyorganosiloxane that has silicon-bonded functional groups.

**11.** The contamination inhibitor according to any one of claims 1 to 8, wherein the polyorganosiloxane that has silicon-bonded functional groups is obtained by condensation of:
(E) a diorganopolysiloxane of which both ends of the molecular chain are blocked with hydroxyl groups, represented by the following formula: HO-(SiR⁹₂O)ₓ-H (wherein R⁹ represents a monovalent hydrocarbon group; and x is a number of 5 to 2700); and
(F) an amino group-containing organoalkoxysilane represented by the following formula: R¹⁰ₙR¹¹Si(OR¹²)₃₋ₙ (wherein R¹⁰ represents a monovalent hydrocarbon group; R¹¹ represents the following formula: -R¹³-(NR¹⁴CH₂CH₂)ₘ-NH-R¹⁵ (wherein R¹³ represents a divalent hydrocarbon group; R¹⁴ and R¹⁵ each independently represents a hydrogen atom or a monovalent hydrocarbon group; and m is an integer of 0 to 5); R¹² represents a monovalent hydrocarbon group; and n is 0 or 1).

**12.** The contamination inhibitor according to any one of claims 1 to 11, which is in the form of an oil-in-water emulsion or a water-in-oil emulsion.

**13.** The contamination inhibitor according to claim 12, further comprising at least one nonionic surfactant.

**14.** The contamination inhibitor according to any one of claims 1 to 13, used for preventing or reducing adhesion of contaminants to a substrate.

**15.** The contamination inhibitor according to any one of claims 1 to 14, used for a paper machine.

**16.** A method for preventing or reducing adhesion of contaminants to a substrate, the method comprising:
applying, to a surface of the substrate, at least one polyorganosiloxane that has silicon-bonded functional groups and that has a number average molecular weight of 3,000 to 500,000 in terms of standard polystyrene as determined by gel permeation chromatography and a silicon-bonded functional group equivalent (a number average molecular weight per mol of the silicon-bonded functional groups) of 3,000 to 500,000 on average.

**17.** Use of at least one polyorganosiloxane that has silicon-bonded functional groups for preventing or reducing adhesion of contaminants to a substrate, wherein the polyorganosiloxane has a number average molecular weight of 3,000 to 500,000 in terms of standard polystyrene as determined by gel permeation chromatography and has a silicon-bonded functional group equivalent (a number average molecular weight per mol of the silicon-bonded functional groups) of 3,000 to 500,000 on average.

**18.** A polyorganosiloxane that has silicon-bonded functional groups for preventing or reducing adhesion of contaminants to a substrate, wherein the polyorganosiloxane has a number average molecular weight of 3,000 to 500,000 in terms of standard polystyrene as determined by gel permeation chromatography and has a silicon-bonded functional group equivalent (a number average molecular weight per mol of the silicon-bonded functional groups) of 3,000 to 500,000 on average.

Statement under Art. 19.1 PCT
"b + d + f represents a number from 0.05 0.01 to 100" recited in previous claim 8 was amended to "b + d + f represents a number from 0.01 to 100". The aforementioned amendment, in which the typographical error present in the previous claim 8 was deleted, clarified claim 8.
